# EUROPEAN PATENT APPLICATION

(11) **EP 2 733 423 A1**
(43) Date of publication of application: **21.05.2014**
(21) Application number: 12810621.8
(22) Date of filing: 12.07.2012
(51) Int. Cl.: F23K 3/02

(54) **METHOD FOR OPERATING PULVERIZED COAL-FIRED BOILER FACILITY**

(30) Priority: 13.07.2011 JP 2011154894
(71) Applicant: Kabushiki Kaisha Kobe Seiko Sho (Kobe Steel, Ltd.), Kobe-shi, Hyogo 651-8585 (JP)
(72) Inventor: TADA, Toshiya, Takasago-shi, Hygo 676-8670 (JP)
(74) Representative: Müller-Boré & Partner Patentanwälte PartG mbB
(86) International application number: PCT/JP2012/067862
(87) International publication number: WO 2013/008893

(57) **Abstract**

Provided is a method for operating a pulverized coal-fired boiler facility, wherein upgraded low-grade coal can be safely used as fuel and an existing facility needs little remodeling. The present invention relates to a method for operating a pulverized coal-fired boiler facility (100) that uses upgraded brown coal as fuel. Boiler exhaust gas taken out of an exhaust gas duct (31) is added to air from a primary air fan (10) to prepare mixed gas with an oxygen concentration of less than 12% in a volume ratio, the mixed gas is caused to separately flow to a carrier gas duct (33) that goes through a GAH (8) and a bypass carrier gas duct (34) that bypasses the GAH (8), and thereafter the mixed gas is supplied to a mill (21).

## Description

### Technical Field

The present invention relates to a method for operating a pulverized-coal-fired boiler facility. More particularly, the present invention relates to a method for supplying a gas to a coal pulverizer (mill) in pulverized-coal-fired boiler facility.

### Background Art

For example, Patent Literatures 1 to 3 describe related technology. Patent Literature 1 describes a technique of supplying a coal pulverizer with a mixed gas (carrier gas) of air (combustion air) and a boiler exhaust gas that has passed through an air preheater. Since the boiler exhaust gas has a lower oxygen concentration than air, the mixed gas of the boiler exhaust gas and air has a lower oxygen concentration than air. The mixed gas can be supplied to the coal pulverizer to prevent the ignition of pulverized coal in the coal pulverizer. Patent Literature 1 discloses that the oxygen concentration of the mixed gas is preferably 16% or less.

Patent Literature 2 describes a technique of using a boiler combustion exhaust gas alone rather than fresh air as a drying carrier gas for pulverized coal in order to prevent the ignition of the pulverized coal. Patent Literature 2 discloses that the boiler combustion exhaust gas has an oxygen concentration in the range of 2% to 5%.

Patent Literature 3 describes a technique of supplying part of a high-temperature boiler exhaust gas and air to a coal pulverizer in order to improve drying of pulverized coal and the thermal efficiency of a boiler.

### Citation List

### Patent Literature

PTL 1: Japanese Unexamined Patent Application Publication No. 11-63471
PTL 2: Japanese Unexamined Patent Application Publication No. 5-272709
PTL 3: Japanese Unexamined Patent Application Publication No. 62-134416

### Summary of Invention

### Technical Problem

A fuel for pulverized-coal-fired boilers as described in Patent Literatures 1 to 3 is generally bituminous coal. Coal resources other than bituminous coal include low-grade coals, such as brown coal and subbituminous coal, which have lower coal ranks than bituminous coal. These low-grade coals account for approximately half of the total coal resources. The present applicant is carrying out research and development to upgrade and use these low-grade coals as substitute fuels for steam coals, such as bituminous coal. A low-grade coal is upgraded, for example, by drying (dehydrating) the low-grade coal. Dehydration of a low-grade coal increases the calorific value of the low-grade coal. A method for dehydrating low-grade coals may be a method for dehydrating low-grade coals in oil (dehydration in oil).

Upgraded low-grade coals resulting from upgrading of low-grade coals have lower ignition temperatures than steam coals. Mixing a low-grade coal and a steam coal having a high ignition temperature allows an upgraded low-grade coal to be used as a fuel for pulverized-coal-fired boilers as described in Patent Literatures 1 to 3. However, the ignition risk in a coal pulverizer (mill) increases with increasing mixing ratio of upgraded low-grade coal to steam coal.

Although Patent Literature 1 discloses that when the oxygen concentration of a mixed gas of a boiler exhaust gas and air is 16% or less the ignition of pulverized coal can be prevented, as described above, this does not take upgraded low-grade coals into consideration. In Patent Literature 2, only the boiler exhaust gas (having an oxygen concentration in the range of 2% to 5%) is supplied to a coal pulverizer as a drying carrier gas for pulverized coal. Although this also does not take upgraded low-grade coals into consideration, this method can prevent the ignition of upgraded low-grade coals having low ignition temperatures. As described as conventional examples in Patent Literatures 1 to 3, however, most of the pulverized-coal-fired boilers in operation use air (fresh air) as a drying carrier gas for pulverized coal. Thus, application of the technique described in Patent Literature 2, which does not use air (fresh air), to existing pulverized-coal-fired boilers requires many complicated modifications. Patent Literature 3 is not directed to the prevention of the ignition of pulverized coal and does not describe the oxygen concentration of a gas supplied to a coal pulverizer.

In view of the situations described above, it is an object of the present invention to provide a method for operating a pulverized-coal-fired boiler facility that uses an upgraded low-grade coal as a fuel. The method allows the upgraded low-grade coal to be safely used as a fuel for pulverized-coal-fired boilers and requires minor modification of existing pulverized-coal-fired boiler facilities.

### Solution to Problem

As a result of extensive studies to solve the problems described above, the present inventors solve the problems by supplying a mixed gas of a boiler exhaust gas and air to a coal pulverizer, the mixed gas having an oxygen concentration of less than 12% by volume. The present invention has been completed on the basis of this finding.

Accordingly, the present invention provides a method for operating a pulverized-coal-fired boiler facility as described below.
(1) A method for operating a pulverized-coal-fired boiler facility that uses an upgraded low-grade coal as a fuel, including:
   preparing a mixed gas having an oxygen concentration of less than 12% by volume by the addition of a boiler exhaust gas to air; and
   supplying the mixed gas to a coal pulverizer.
      This method can prevent the ignition of pulverized coal (upgraded low-grade coal) in a coal pulverizer and allows an upgraded low-grade coal to be safely used as a fuel for pulverized-coal-fired boilers. Use of a gas having an oxygen concentration of 12% by volume or more markedly increases the ignition risk of upgraded low-grade coals. In the present invention, air is supplied to a coal pulverizer in the same manner as before. Thus, the present invention requires minor modification of existing pulverized-coal-fired boiler facilities.
(2) The method for operating a pulverized-coal-fired boiler facility according to (1), wherein
   the mixed gas flow is divided and flows into a carrier gas path that passes through a gas heater and a bypass carrier gas path that bypasses the gas heater, and
   the mixed gas is then supplied to the coal pulverizer.
   This method allows the temperature and oxygen concentration of a mixed gas to be independently controlled. Thus, existing control systems can be directly used without modification to control the temperature of a gas supplied to a coal pulverizer.
(3) The method for operating a pulverized-coal-fired boiler facility according to (1), further including extracting the boiler exhaust gas from the exhaust gas path disposed downstream of a desulfurization tower.
(4) The method for operating a pulverized-coal-fired boiler facility according to (2), further including extracting the boiler exhaust gas from the exhaust gas path disposed downstream of a desulfurization tower.

These methods can reduce the sulfur content of a mixed gas supplied to a coal pulverizer and prevent corrosion of the coal pulverizer.

### Advantageous Effects of Invention

In accordance with the present invention, a mixed gas having an oxygen concentration of less than 12% by volume prepared by mixing air and a boiler exhaust gas is supplied to a coal pulverizer. This can prevent the ignition of pulverized coal (upgraded low-grade coal) in the coal pulverizer and allows an upgraded low-grade coal to be safely used as a fuel for pulverized-coal-fired boilers. In addition, the present invention requires minor modification of existing pulverized-coal-fired boiler facilities.

### Brief Description of Drawings

[Fig. 1] Fig. 1 is a block diagram of a pulverized-coal-fired boiler facility according to an embodiment of the present invention.
[Fig. 2] Fig. 2 is a graph of an explosive region of dried brown coal (upgraded brown coal).
[Fig. 3] Fig. 3 is a block diagram of a known pulverized-coal-fired boiler facility.

### Description of Embodiments

Embodiments of the present invention will be described below with reference to the drawings. The description of a known common pulverized-coal-fired boiler facility is followed by the description of a pulverized-coal-fired boiler facility according to an embodiment of the present invention.

### (Known Pulverized-Coal-Fired Boiler Facility)

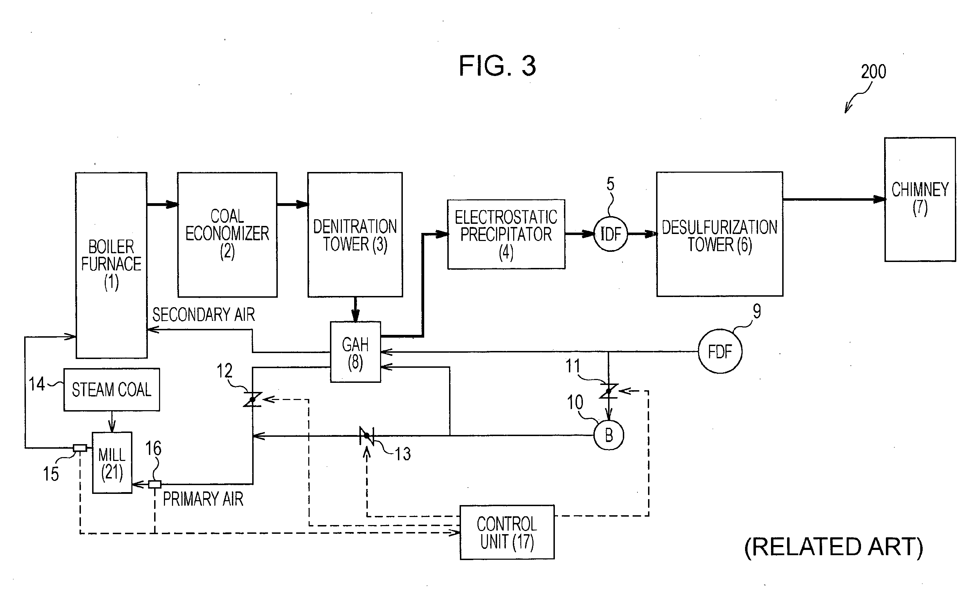

As illustrated in Fig. 3, a known common pulverized-coal-fired boiler facility 200 includes a boiler furnace 1, a coal economizer 2, a denitration tower 3, an electrostatic precipitator 4, an induced draft fan (IDF) 5, a desulfurization tower 6, a chimney 7, a hopper 14, a mill 21 (coal pulverizer), a gas heater (GAH) 8, a forced draft fan (FDF) 9, a primary air fan 10, and a control unit 17, for example. A gas thermometer 15 is disposed at a mill outlet on an outlet duct of the mill 21. A gas flowmeter 16 is disposed at a mill inlet on an inlet duct of the mill 21. A valve 12 is disposed on a duct between the GAH 8 and the mill 21. A valve 13 is disposed on a bypass duct of the GAH 8. A valve 11 is disposed on the intake side of the primary air fan 10.

A steam coal supplied to the mill 21 through the hopper 14 is pulverized in the mill 21, is carried by an air current into the boiler furnace 1, and is burnt in the boiler furnace 1. A high-temperature boiler exhaust gas produced by the combustion of the pulverized coal is subjected to heat recovery in the boiler furnace 1 and the coal economizer 2 and nitrogen oxide removal in the denitration tower 3. The boiler exhaust gas heats primary air supplied to the mill 21 and secondary air supplied to the boiler furnace 1 in the GAH 8. The boiler exhaust gas is subjected to ash removal in the electrostatic precipitator 4 and sulfur oxide removal in the desulfurization tower 6 and is then discharged from the chimney 7.

The steam coal supplied through the hopper 14 is pulverized and dried in the mill 21. The steam coal is dried with the primary air having a temperature in the range of approximately 200°C to 300°C supplied from the primary air fan 10 to the mill 21. The flow rate of the primary air is controlled by the degree of opening of the valve 11. The mill outlet temperature of the primary air is controlled by the degree of opening of the valves 12 and 13. The control unit 17 controls the flow rate of the primary air by the degree of opening of the valve 11 upon receiving signals from the gas flowmeter 16. The control unit 17 controls the mill outlet temperature of the primary air by the degree of opening of the valves 12 and 13 upon receiving signals from the gas thermometer 15. For example, the mill outlet temperature of the primary air is controlled in the range of 60°C to 70°C.

The valve 11 is a flow rate control valve for the primary air. The valves 12 and 13 are temperature control valves for the primary air.

As illustrated in Fig. 3, fuels for use in the pulverized-coal-fired boiler facility 200 are steam coals, such as bituminous coal, which have higher ignition temperatures than low-grade coals, such as brown coal and subbituminous coal. Thus, the ignition of pulverized coal in the mill 21 has rarely been seen as a problem. When considering the future use of an upgraded low-grade coal having a high calorific value and a low ignition temperature as a fuel for pulverized-coal-fired boilers, however, it is feared that the pulverized-coal-fired boiler facility 200 as illustrated in Fig. 3 without any modification may cause the ignition of pulverized coal in the mill 21.

### (Example of Pulverized-Coal-Fired Boiler Facility according to Present Invention)

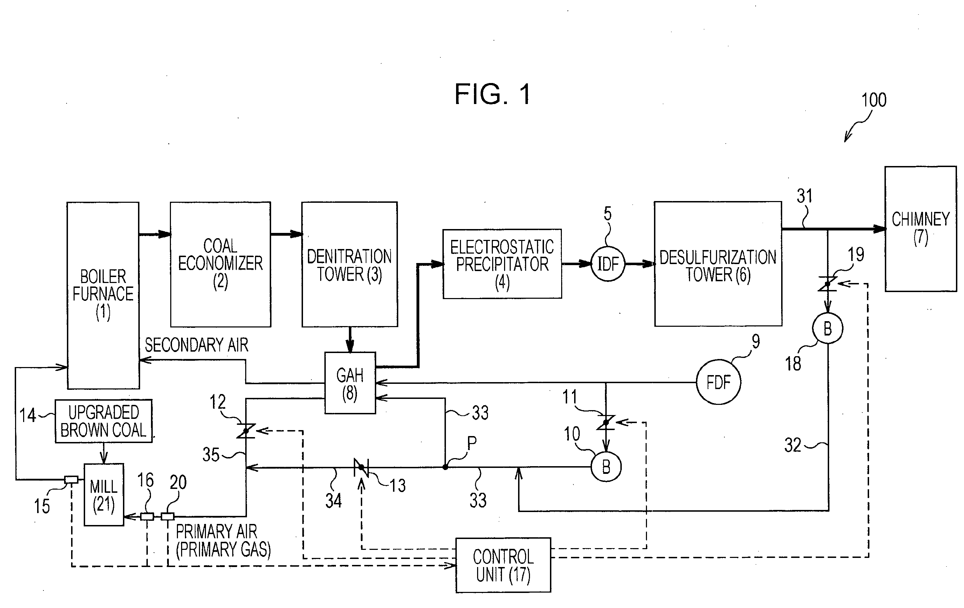

Fig. 1 is a block diagram of a pulverized-coal-fired boiler facility 100 according to an embodiment of the present invention. The same components as the known pulverized-coal-fired boiler facility 200 illustrated in Fig. 3 are denoted by the same reference numerals.

### (Extraction Path of Boiler Exhaust Gas)

As illustrated in Fig. 1, the pulverized-coal-fired boiler facility 100 according to the present embodiment includes an exhaust gas extraction duct 32 (exhaust gas extraction path) for extracting part of the boiler exhaust gas from an exhaust gas duct 31 (exhaust gas path) between a desulfurization tower 6 and a chimney 7 and injecting the extracted boiler exhaust gas into a carrier gas duct 33 (carrier gas path) disposed upstream of a GAH 8 (upstream with respect to a primary air flow). The exhaust gas extraction duct 32 is equipped with an exhaust gas extraction fan 18 and a valve 19. The boiler exhaust gas is cooled in the desulfurization tower 6 and becomes a low-temperature exhaust gas.

The boiler exhaust gas extracted from the exhaust gas duct 31 disposed downstream of the desulfurization tower 6 can be supplied to a mill 21 as described below in order to reduce the sulfur content of a mixed gas supplied to the mill 21 and thereby prevent corrosion of the mill 21.

The boiler exhaust gas is not necessarily extracted from the downstream side of the desulfurization tower 6. For example, the boiler exhaust gas may be extracted from the downstream side of an electrostatic precipitator 4 or even an exhaust gas duct disposed upstream of the electrostatic precipitator 4. When the boiler exhaust gas is extracted from the downstream side of the electrostatic precipitator 4, the boiler exhaust gas subjected to at least ash removal can be added to air.

### (Structure around Carrier Gas Duct)

A primary air fan 10 is connected to the GAH 8 through the carrier gas duct 33. The GAH 8 is connected to the mill 21 through a carrier gas duct 35. The carrier gas duct 33 is connected to the carrier gas duct 35 through a bypass carrier gas duct 34 (bypass carrier gas path). Air from the primary air fan 10 and the boiler exhaust gas from the exhaust gas extraction fan 18 can bypass the GAH 8 through the bypass carrier gas duct 34. The carrier gas duct 35 and the bypass carrier gas duct 34 are equipped with a valve 12 and a valve 13, respectively. The bypass carrier gas duct 34 diverges from the carrier gas duct 33 at a branch point P and is connected to the carrier gas duct 35 on the downstream side of the valve 12.

A mill inlet of the carrier gas duct 35 is equipped with a gas flowmeter 16 and an oxygen meter 20.

In the carrier gas duct 33 of the pulverized-coal-fired boiler facility 100 according to the present embodiment, the low-temperature boiler exhaust gas extracted from the carrier gas duct 33 is added to air (the outside air) flowing from the primary air fan 10 to produce a mixed gas. The mixed gas is supplied to the mill 21 through the carrier gas duct 33 passing through the GAH 8 and the bypass carrier gas duct 34 bypassing the GAH 8. The ratio of the mixed gas flowing through the carrier gas duct 33 to the mixed gas flowing through the bypass carrier gas duct 34 is controlled to achieve a target mill outlet temperature (for example, in the range of 60°C to 70°C). The mixed gas flowing through the carrier gas duct 33 is heated in the GAH 8 with the high-temperature boiler exhaust gas that has passed through the boiler furnace 1, the coal economizer 2, and the denitration tower 3. The GAH 8 is a gas-gas heat exchanger. The air (secondary air) supplied from a FDF 9 to the boiler furnace 1 is also heated in the GAH 8 with the high-temperature boiler exhaust gas that has passed through the boiler furnace 1, the coal economizer 2, and the denitration tower 3. Pulverized coal (upgraded brown coal) in the mill 21 is dried with the mixed gas and is carried by the mixed gas into the boiler furnace 1.

### (Control Unit)

A control unit 17 according to the present embodiment controls the flow rate and oxygen concentration of the mixed gas by the degree of opening of the valves 11 and 19 upon receiving signals from the gas flowmeter 16 and the oxygen meter 20 and controls the mill outlet temperature of the mixed gas by the degree of opening of the valves 12 and 13 upon receiving signals from the gas thermometer 15.

For example, the control unit 17 controls the degree of opening of the valves 11 and 19 such that the oxygen concentration of the mixed gas is less than 12% by volume. When the flow rate of the gas passing through the valves 11 and 19 is in direct proportion to the degree of opening of the valves 11 and 19, in order to increase the flow rate of the mixed gas, the degree of opening of the valves 11 and 19 is increased while the ratio of the degree of opening between the valves 11 and 19 is kept substantially constant.

In order to control the mill outlet temperature of the mixed gas, the control unit 17 independently controls the degree of opening of the valves 12 and 13, in addition to the control of the degree of opening of the valves 11 and 19 to control the flow rate and oxygen concentration of the mixed gas. The valves 12 and 13 are temperature control valves for the mixed gas.

The present embodiment can independently perform the oxygen concentration and flow rate control and the temperature control. Thus, the temperature of the gas supplied to the mill 21 can be controlled using the control unit 17 of the known boiler facility 200 illustrated in Fig. 3 without modification. The flow rate of the gas can be controlled with the existing control unit 17 illustrated in Fig. 3 with minor modification.

If the downstream end of the exhaust gas extraction duct 32 is connected to the carrier gas duct 35 disposed downstream of the bypass carrier gas duct 34 and the GAH 8, the oxygen concentration control, flow rate control, and temperature control of the mixed gas become complicated. In order to prevent the ignition of pulverized coal, however, even if the downstream end of the exhaust gas extraction duct 32 is connected to the carrier gas duct 35 disposed downstream of the bypass carrier gas duct 34 and the GAH 8, the boiler exhaust gas may be added to air in the bypass carrier gas duct 34 or in the carrier gas duct 35 disposed downstream of the GAH 8 without problems.

The valves 11, 19, 12, and 13 may be dampers or butterfly valves, which are more gastight than dampers. The valves 12, 13, 11, and 19 may be electrically powered. When the valves 11, 19, 12, and 13 are butterfly valves, the valves can more precisely control the gas flow rate and thereby more precisely control the oxygen concentration, flow rate, and temperature of the mixed gas.

### (Oxygen Concentration of Gas Supplied to Coal Pulverizer)

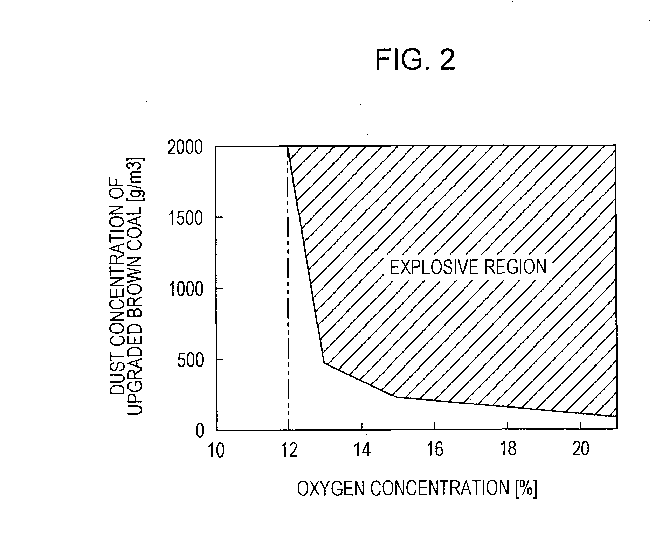

Fig. 2 is a graph of an explosive region of dried brown coal (upgraded brown coal). In Fig. 2, the vertical axis represents the dust concentration of upgraded brown coal, and the horizontal axis represents the oxygen concentration of the ambient gas containing dust. The oxygen concentration is expressed as the volume ratio. Pulverized coal having a particle size of 75 µm or less constitutes approximately 80% of the upgraded brown coal dust (pulverized coal) used for data in Fig. 2.

Upgraded brown coal is produced by drying (dehydrating) brown coal. Dehydration of brown coal increases the calorific value of the brown coal. A method for dehydrating brown coal may be a method for dehydrating brown coal in oil (dehydration in oil). The upper limit on the vertical axis (2000 g/m³) in Fig. 2 includes the dust concentration of the mill in normal operation. Fig. 2 shows that the explosion (ignition) risk of the upgraded brown coal increases rapidly when the oxygen concentration of the ambient gas containing upgraded brown coal dust is 12% by volume or more. Thus, the ignition of pulverized coal of upgraded brown coal in the mill 21 can be prevented by supplying a mixed gas of air and a boiler exhaust gas, the mixed gas having an oxygen concentration of less than 12% by volume, to the mill 21 as a drying carrier gas for the pulverized coal. Thus, upgraded brown coal can be safely used as a fuel for pulverized-coal-fired boilers. In the present embodiment, air is supplied to the mill 21 in the same manner as before. Thus, the present embodiment requires minor modification of existing pulverized-coal-fired boiler facilities. Upgraded brown coal in the mill 21 is pulverized such that pulverized coal having a particle size of 75 µm or less constitutes 70% or more of the entire pulverized coal.

It goes without saying that it is not necessary to use 100% upgraded brown coal as a fuel for the boiler furnace 1 (upgraded brown coal firing), and a mixed coal of upgraded brown coal and steam coal may be used as a fuel for the boiler furnace 1. Instead of upgraded brown coal resulting from upgrading of brown coal, upgraded subbituminous coal resulting from upgrading of subbituminous coal may also be used as a fuel for the boiler furnace 1. Thus, in accordance with the present embodiment, upgraded low-grade coals, such as upgraded brown coal, can be safely used.

Furthermore, when a mixed gas having an oxygen concentration of 10% by volume or less is supplied to the mill 21, upgraded low-grade coal can be more safely used as a fuel for the boiler furnace 1. In order to improve boiler efficiency, a mixed gas having an oxygen concentration of 6% by volume or more is preferably supplied to the mill 21.

Although the embodiments of the present invention have been described, the present invention is not limited to these embodiments. Various modifications may be made in the embodiments within the scope of the claims.

The present application is based on Japanese Patent Application (Japanese Patent Application No. 2011-154894) filed on July 13, 2011, which is incorporated herein by reference.

### Industrial Applicability

In accordance with the present invention, a mixed gas having an oxygen concentration of less than 12% by volume prepared by mixing air and a boiler exhaust gas is supplied to a coal pulverizer. This can prevent the ignition of pulverized coal (upgraded low-grade coal) in the coal pulverizer and allows an upgraded low-grade coal to be safely used as a fuel for pulverized-coal-fired boilers. In addition, the present invention requires minor modification of existing pulverized-coal-fired boiler facilities. Reference Signs List
- 1: boiler furnace
- 2: coal economizer
- 3: denitration tower
- 4: electrostatic precipitator
- 5: induced draft fan (IDF)
- 6: desulfurization tower
- 7: chimney
- 8: GAH(gas heater)
- 9: forced draft fan (FDF)
- 10: primary air fan
- 11, 12, 13, 19: valve
- 14: hopper
- 15: gas thermometer
- 16: gas flowmeter
- 17: control unit
- 18: exhaust gas extraction fan
- 20: oxygen meter
- 21: mill (coal pulverizer)
- 100: pulverized-coal-fired boiler facility

## Claims

1. A method for operating a pulverized-coal-fired boiler facility that uses an upgraded low-grade coal as a fuel, comprising:
preparing a mixed gas having an oxygen concentration of less than 12% by volume by the addition of a boiler exhaust gas to air; and
supplying the mixed gas to a coal pulverizer.

2. The method for operating a pulverized-coal-fired boiler facility according to Claim 1, wherein
the mixed gas flow is divided and flows into a carrier gas path that passes through a gas heater and a bypass carrier gas path that bypasses the gas heater, and
the mixed gas is then supplied to the coal pulverizer.

3. The method for operating a pulverized-coal-fired boiler facility according to Claim 1, further comprising extracting the boiler exhaust gas from the exhaust gas path disposed downstream of a desulfurization tower.

4. The method for operating a pulverized-coal-fired boiler facility according to Claim 2, further comprising extracting the boiler exhaust gas from the exhaust gas path disposed downstream of a desulfurization tower.
